(19) **Europäisches Patentamt**
**European Patent Office**
**Office européen des brevets**

(11) **EP 1 617 116 B1**

(12) **EUROPEAN PATENT SPECIFICATION**

(45) Date of publication and mention
of the grant of the patent:
**07.11.2007 Bulletin 2007/45**

(51) Int Cl.:
*F16K 31/06* (2006.01)          *H01F 7/08* (2006.01)
*H01F 7/16* (2006.01)

(21) Application number: **05013408.9**

(22) Date of filing: **21.06.2005**

(54) **Solenoid-operated valve**

Elektromagnetisches Ventil

Electrovanne

(84) Designated Contracting States:
**DE**

(30) Priority: **14.07.2004 JP 2004207500**
          **27.09.2004 JP 2004279204**
          **08.06.2005 JP 2005168621**
          **08.06.2005 JP 2005168622**

(43) Date of publication of application:
**18.01.2006 Bulletin 2006/03**

(73) Proprietor: **JTEKT CORPORATION**
**Chuo-ku,**
**Osaka (JP)**

(72) Inventors:
• **Suzuki, Masaru**
**JTEKT CORPORATION**
**Chuo-ku**
**Osaka (JP)**
• **Suzuki, Mikio**
**JTEKT CORPORATION**
**Chuo-ku**
**Osaka (JP)**
• **Segi, Masaya**
**JTEKT CORPORATION**
**Chuo-ku**
**Osaka (JP)**
• **Takanishi, Koichi**
**JTEKT CORPORATION**
**Chuo-ku**
**Osaka (JP)**
• **Fujita, Kaori**
**JTEKT CORPORATION**
**Chuo-ku**
**Osaka (JP)**

(74) Representative: **TBK-Patent**
**Bavariaring 4-6**
**80336 München (DE)**

(56) References cited:
**US-A- 5 685 519**          **US-A1- 2003 047 699**
**US-B1- 6 453 947**

• **PATENT ABSTRACTS OF JAPAN vol. 2000, no. 13, 5 February 2001 (2001-02-05) & JP 2000 274546 A (TOYODA MACH WORKS LTD), 3 October 2000 (2000-10-03)**
• **PATENT ABSTRACTS OF JAPAN vol. 2000, no. 01, 31 January 2000 (2000-01-31) & JP 11 287348 A (TOSOK CORP), 19 October 1999 (1999-10-19)**

**Description**

The present invention relates to a solenoid-operated valve according to the preambles of the independent claims.

Discussion of the Related Art:

US 2003/0047699 A1 discloses a generic solenoid-operated valve. The valve comprises a valve sleeve and a spool slidably received in the valve sleeve for regulating the pressure of fluid supplied thereto; a stator having a core provided with an annular projecting portion; a plunger received in the stator to be slidably guided in an inner bore formed in the stator and being movable into the annular projecting portion; a spring for resiliently urging the spool toward the plunger; and an solenoid for magnetizing the stator to attract the plunger against the resilient force of the spring so as to move the plunger into the annular projecting portion. The annular projecting portion is formed with a tapered portion whose sectional area becomes smaller as a section is closer to the rear end thereof and a thin cylindrical portion that projects from the rear end of the tapered portion. Additionally, the annular projecting portion may be optionally provided with a hole and an opening portion on the inside of the thin cylindrical portion.

Further, in general, a solenoid-operated valve is used for controlling fluid pressure applied to a clutch Which is a part of an automatic transmission equipped in a motor vehicle. Heretofore, as solenoid-operated valves of this type, there has been known one described in JP-11-287348 A. In the known solenoid-operated valve, a core that is magnetized by a solenoid is provided with an annular tapered portion at its rear end. The tapered portion has an outer surface so inclined that the magnetic attraction force hardly varies as a front end of a plunger is attracted in the tapered portion due to the influence of the inclination of the suitable degrees of the tapered portion. The characteristics that the magnetic attraction force hardly varies as the front end of the plunger moves in the tapered portion is effective to enhance the damping force which acts on the plunger, and thereby to prevent the clutch from being vibrated by the pressure fluctuation when a high electric current is applied to the solenoid and there is no flow of high pressure fluid from the outlet port to the clutch.

In JP-2000-274546 A, an annular cylindrical portion is projected from the rear end of the annular tapered portion to increase the magnetic attraction force when the front end of the plunger is at the end of the annular cylindrical portion.

In a solenoid-operated valve, when a low electric current is applied to the solenoid so that a low fluid pressure is supplied to the dutch, it is effective to increase the opening degree in communication of an inlet port to which constant pressure fluid is introduced with the outlet port in order to enhance the responsively of the clutch.

On the other hand, the characteristics that the magnetic attraction force hardly varies as the plunger moves is effective to enhance the damping force which acts on the plunger, and thereby to prevent the clutch from being vibrated by the pressure fluctuation when the high increasing electric current is applied to the solenoid. Therefore, such solenoid operated valve is desired that supplies the pressure regulated fluid to the dutch, wherein the responsively of the clutch is high when a low electric current is applied to the solenoid, and the clutch is reluctant to vibrate when the increasing high electric current is applied to the solenoid.

SUMMARY OF THE INVENTION

It is an object of the present invention to further improve a solenoid-operated valve according to the preambles of the independent claims such that it is capable of enhancing the responsiveness of a device that is supplied fluid pressure from the solenoid-operated valve while an electric current applied to the solenoid is in a low current range, and also capable of preventing the device from being vibrated by the fluid pressure fluctuation while an electric current applied to the solenoid is in a high current range.

The object of the present invention is achieved by the features defined in the independent claims 1 and 2, respectively.

Further advantageous developments are defined in the dependent claims.

Briefly, according to the present invention, there is provided a solenoid-operated valve which comprises a valve sleeve and a spool slidably received in the valve sleeve for regulating the pressure of fluid supplied thereto, a stator having a core provided with an annular projecting portion, a plunger received in the stator to be slidably guided in an inner bore formed in the stator and being movable into the annular projecting portion, a spring for resiliently urging the spool toward the plunger, an solenoid for magnetizing the stator to attract the plunger against the resilient force of the spring so as to move the plunger into the annular projecting portion. The annular projecting portion is formed with a tapered portion whose sectional area becomes smaller as a section is closer to the rear end thereof and a thin cylindrical portion that projects from the rear end of the tapered portion. A step that has an end surface is formed on the outside of the annular projecting portion between the rear end of the tapered portion and the thin cylindrical portion.

With this configuration, since the step is formed on the outside of the annular projecting portion between the tapered portion and the thin cylindrical portion, the tapered portion can be formed as it has an inclination of any suitable degrees, wherein the magnetic attraction force hardly varies as the plunger moves in the tapered portion. Accordingly, the damping force which acts on the plunger is enhanced, to prevent the clutch from being vibrated by the pressure fluctuation when the high increasing electric current is applied to the solenoid. And, the annular cylindrical portion can be formed thin enough to enhance the responsivety of the clutch when a low electric current is applied to the solenoid so that a low fluid pressure is supplied to the clutch.

BRIEF DESCRIPTION OF THE ACCOMPANYING DRAWINGS

The foregoing object and many of the attendant advantages of the present invention may readily be appreciated as the same becomes better understood by reference to a preferred embodiment of the present invention when considered In connection with the accompanying drawings, wherein like reference numerals designate the same or corresponding parts throughout several views, and in which:

Figure 1 is a longitudinal sectional view of a solenoid-operated valve in the first embodiment according to the present invention;
Figure 2 is an enlarged sectional view showing around a tapered portion of a core;
Figure 3 is a longitudinal sectional view of a clutch that is supplied fluid pressure from the solenoid-operated valve;
Figure 4 is a graph showing the characteristics of a relationship between a magnetic attraction force and a position of the plunger;
Figure 5 is a graph showing the characteristic of the fluid pressure that increases as the time passes;
Figure 6 is a graph showing the characteristics of the fluid pressure that change as an electric current applied to a solenoid increases;
Figure 7 is an enlarged sectional view showing around a tapered portion of a core in the second embodiment;
Figure 8 is an enlarged sectional view showing around a tapered portion of a core in the third embodiment;
Figure 9 is an enlarged sectional view showing around a tapered portion of a core in the forth embodiment.

DETAILED DESCRIPTION OF THE PREFERRED EMBODIMENT

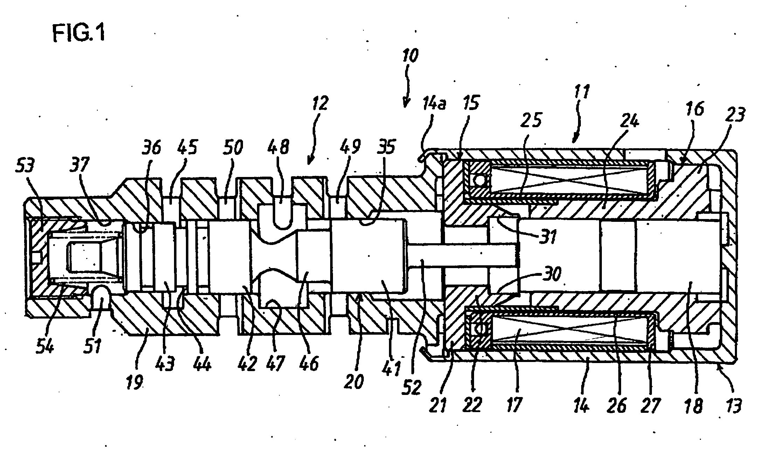

Hereinafter, a solenoid-operated valve in the first embodiment according to the present invention will be described with reference to Figures 1. The solenoid-operated valve 10 In this particular embodiment is composed of an electromagnetic drive section 11 and a spool valve section 12 which is fixed to an end of the electromagnetic drive section 11, The electromagnetic drive section 11 is composed primarily of a cover 14, core 15, a yoke 16, a solenoid 17 and a plunger 18. The spool valve section 12 is composed primarily of a valve sleeve 19 and a spool 20 slidably received in the valve sleeve 19.

The cover 14 which takes a cylindrical shape with a bottom (i.e., cup shape) accommodates the yoke 16 and the core 15 therein. The cover 14, the yoke 16 and the core 15 are made of magnetic material. The core 15 is provided with a flange 21 in the opening portion of the cover 14 and a cylindrical portion 22 which extends from the flange 21 towards the bottom of the cover 14. The yoke 16 is provided with a flange 23 In the bottom portion of the cover 14 and a cylindrical portion 24 which extends from the flange 23 towards the opening portion of the cover 14.

The cylindrical portion 22 of the core 15 and the cylindrical portion 24 of the yoke 16 are fit in a stainless ring 25 made of non-magnetic material, so that the core 15 and the yoke 16 are held in axial alignment with leaving an air gap therebetween that magnetically separates the end surfaces of the cylindrical portions 22 and 24. The plunger 18 made of magnetic material is slidably fit in a through hole formed in the yoke 16 on its axis.

The flange 23 of the yoke 16 is fit in the bottom portion of the cover 14, and the flange 21 of the core 15 is fit in the opening portion of the cover 14, so that an annular space 26 is formed around the cylindrical portions 22 and 24 between flanges 23 and 21. A bobbin 27 of a solenoid 17 is fixedly fit in the annular space 26.

The core 15 is provided with a stepped through hole on its axis, whose large-diameter hole 30 has an appropriate length thereby to form an annular projecting portion 31 at the rear end thereof. The diameter of the large-diameter hole 30 is a little larger than the diameter of the plunger 18 so that the front end of the plunger 18 may move into the large-diameter hole 30. And, the length of the large-diameter hole 30 is a little longer than the maximum distance that the plunger 18 moves from a retracted position where its rear end surface abuts on the inner bottom surface of the cover 14 as shown in Figure 1.

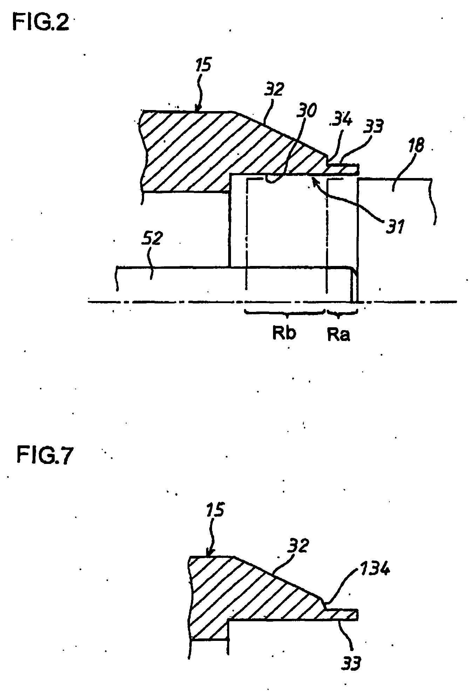

As shown in detail in Figure 2, the annular projecting portion 31 is composed of a tapered portion 32 whose sectional area becomes smaller as a section is closer to the rear end of the tapered portion 32 and a thin cylindrical portion 33 that projects from the rear end surface of the tapered portion 32 toward the yoke 16. The thickness of the wall of the cylindrical portion 33 is 0.3 - 0.5 millimeters. The diameter of the rear end of the tapered portion 32 is larger than an outer diameter of the thin cylindrical portion 33 to form a step 34 having an end surface perpendicular to the direction of the axial movement of the plunger 18.

By forming the step 34 on the outside of the annular projecting portion 31 between the tapered portion 32 and the thin cylindrical portion 33, it becomes possible that the tapered portion has an Inclination of any suitable degrees, in spite of forming the thin cylindrical portion having the wall of the appropriate thickness. In other words, the rear end diameter of the tapered portion 32 is not required to be the same as the outer diameter of the thin cylindrical portion 33.

The annular projecting portion 31 functions to flow flux between the core 15 and the plunger 18 in the magnetic circuit constituted by the core 15, the plunger 18, the yoke 16, the cover 14 and the solenoid 17. The core 15, the yoke 16 and the cover 14 constitute a stator 13.

The valve sleeve 19 slidably receiving a spool 20 therein is arranged in abutting contact with the flange 21 of the core 15 in the opening portion of the cover 14. The valve sleeve 19 is secured to the electromagnetic drive section 11 in axial alignment therewith by caulking the opening end portion of the cover 14 with a flange of the valve sleeve 19 being in abutting contact with the flange 21 of the core 15. The core 15 and the yoke 16 accommodated in the cover 14 are axially secured between the bottom of the cover 14 and the flange of the valve sleeve 19 with intervening the stainless ring 25.

The valve sleeve 19 is provided therein with a first valve hole 35, a second valve hole 36 larger in diameter than the first valve hole 35 and a spring-accommodating hole 37 communicating with the second valve hole 36, which are coaxial with the core 15 and the plunger18.

The spool 20 is provided with a first land portion 41 and a second land portion 42 that are fit in the first valve hole 35, and a third land portion 43 that is fit in the second valve hole 36. The second land portion 42 and the third land portion 43 are adjacent to each other to form a step portion 44 therebetween. The step portion 44 is in an annular groove that is formed between the first valve hole 35 and the second valve hole 36 thereby to define a feedback chamber. A feed back port 45 which communicates with the feedback chamber is formed radially of the valve sleeve 19.

The first land portion 41 and the second land portion 42 are connected with each other by a small-diameter portion 46 with making an appropriate axial space therebetween. An annular groove 47 that faces the small-diameter portion 46 is formed on an interior surface of the first valve hole 35. An outlet port 48 that communicate with the annular groove 47 is formed at the axially mid position of the valve sleeve 21. The outlet port 48 is in communication with the feedback port 45 through a conduit, not shown. A discharge port 49 that is connected to a reservoir and a inlet port 50 that is connected to a fluid supply source are radially formed in the valve sleeve 21 at respective sides of the outlet port 48. The discharge port 49 and the inlet port 50 open to the valve hole 35 at respective positions where the opposite end surfaces of the first and second land portion 41 and 42 are located. The valve sleeve 21 has a drain port 51 that opens to the spring-accommodating hole 37. A rod portion 52 which is formed to protrude from a rear end of the spool 20 extends passing through the stepped through hole of the core 15 and abuts on the front end surface of the plunger 18.

The opening of the spring-accommodating hole 37 is closed by a plug 53 screwed into the forward end of the valve sleeve 21. A spring 54 is interposed between the spool 20 and the plug 53 to urge the spool 20 resiliently rearwards with the rod portion 52 abutting on the plunger 18. Thus, in the inoperative state, the plunger 18 is kept at the retracted position where the rear end surface thereof abuts on the inner bottom surface of the cover 14. As shown in Figures 1and 2, when the plunger is at the retracted position, the rear end of the annular projecting portion 31 of the core 15 and the front end of the plunger 18 are axially coincide with each other.

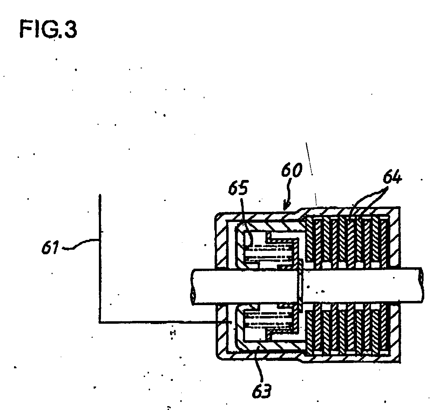

Pressure fluid controlled at a constant pressure by a regulator valve, not shown, is supplied to the inlet port 50 from the fluid supply source. The outlet port 48 is connected with a pressure chamber provided in a clutch 60 of an automatic transmission through a supply line 61, as shown in Figure 3. The clutch 60 is a device that is supplied the fluid pressure from the solenoid-operated valve 10. The clutch 60 is composed of a piston 63 that is moved in response to the fluid pressure introduced into the pressure chamber and multiple clutch plates 64 that are in friction-engagement with each other when pressed by the piston 63. The piston 63 is urged by a resilient force of a spring 65 exerted thereon to be separated from the clutch plates 64, and is moved against the resilient force of the spring 65 when the fluid pressure introduced into the pressure chamber of the clutch 60 to press the clutch plates 63.

An operation of the solenoid-operated valve 10 in the first embodiment according to the present invention will be explained. When the solenoid is not excited, the spool 20 is urged by the spring 54 to move the plunger 18 rightward as viewed in figure 1, so that the plunger 18 and spool 20 is kept at the retracted position where the rear end surface thereof abuts on the inner bottom surface of the cover 14. In this inoperative state, the outlet port 48 communicates with the discharge port 49 but is interrupted to communicate with the inlet port 50 by the second land portion 42 of the spool 20.

When an electric current is applied to the solenoid 17, the stator 13 is magnetized in proportion to the magnitude of the electric current applied thereto, and thereby to the plunger 18 is attracted toward the core 15 together with the spool 20 against the resilient force of the spring 54. In proportion to the moving amount of the spool 20, the second land portion 42 thereof increases the opening degree in communication of the inlet port 50 with the outlet port 48 and the first land portion 41 decreases the opening degree in communication of the outlet port 48 with the discharge port 49. Accordingly, the fluid pressure P introduced to the pressure chamber of the clutch 60 from the outlet port 48 is increased, so that the clutch 60 is engaged with the friction force generated on the clutch plates 64 in proportion to the magnitude of the electric current applied to the solenoid 17.

The fluid pressure P from the outlet port 48 is also introduced to the feedback chamber through the feedback port 45 to act on the step portion 44 formed between the second land portion 42 and the third land portion 43. A feedback force that is the product of the fluid pressure P multiplied by the difference in area between the second land portion 42 and the third land portion 43 acts on the spool 20 in the same direction where the resilient force of the spring 54 acts thereon.

In the solenoid operated valve 10, the plunger 18 and the spool 20 are held at a balanced position where a magnetic attraction force with which the core 15 attracts the plunger in proportion with the electric current applied to the solenoid 17 balances with the sum of the resilient force of the spring 54 and the feedback force exerted on the spool 20, whereby the fluid pressure P is controlled by the magnitude of the electric current applied to the solenoid 17.

The fluid pressure P is calculated with an equation of F (ix)=PxS+k(a+L-x), therein; is an electric current applied to the solenoid 17, k is the spring constant of the spring 54, L is the maximum distance that the plunger 18 and the spool 20 move between the retracted position and the most advanced position where the spool 20 abuts on the plug 53, x is an actual distance that the plunger 18 and the spool 20 are apart from the most advanced position, S is the difference in area between the second land portion 42 and the third land portion 43, a is the initially compressed amount of the spring 54, and F(lx) is a magnetic attraction force that is exerted on the plunger 18 when an electric current I is applied to the solenoid 17 and the plunger 18 is apart distance x from the most advanced position.

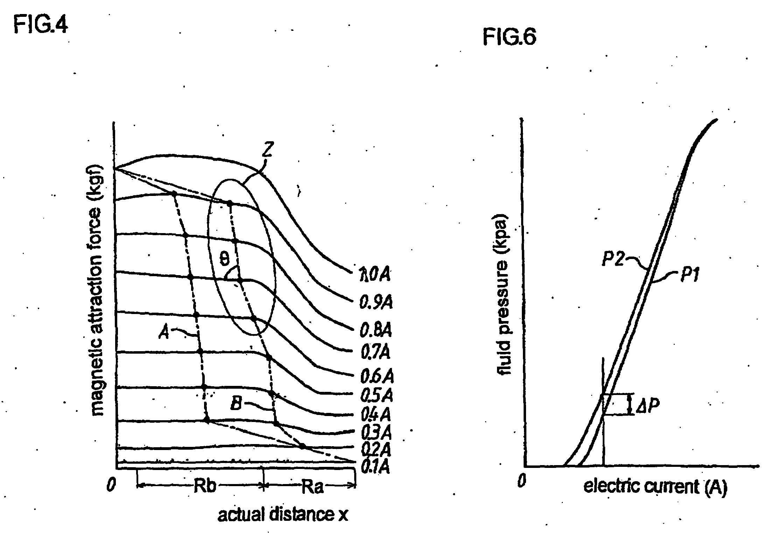

In the first embodiment, as the thin cylindrical portion 33 is formed at the rear portion of the annular projecting portion 31, the saturated degree of the thin cylindrical portion 33 with a magnetic flux becomes high even when the electric current applied to the solenoid 17 is low, wherein the front end of the plunger 18 positions in the range Ra axially corresponding to the thin cylindrical portion 33 as shown in Figures 2 and 4, the magnetic attraction force increases as the actual distance x decreases as a graph in Figure 4 shows its characteristics. And, when the electric current applied to the solenoid 17 is high, wherein the front end of the plunger 18 positions in the range Rb axially corresponding to the tapered portion 32 as shown in Figure 2, the magnetic attraction force hardly varies as the actual distance x decreases due to the influence of the inclination of the suitable degrees of the tapered portion 32 as the graph in Figure 4 shows its characteristics.

The plunger 18 and the spool 20 are held at the balanced position where the magnetic attraction force exerted on the plunger 18 balances with the sum of the resilient force of the spring 54 and the feedback force exerted on the spool 20. And, while the piston 63 is moved in response to the fluid pressure 4hereafter referred to simply as "piston moving state"), the fluid pressure P from the outlet port 48 becomes lower than that from the outlet port 48 while the piston 63 stops after pressing the clutch plates 64 to frictionally engage the clutch 60 (hereafter referred to simply as "piston stopping state").

Therefore, in the piston moving state, the balanced position of the plunger 18 changes along a chain line A in Figure 4 as the magnetic attraction force varies, and in the piston stopping state, the balanced position of the plunger 18 changes along a two-dot chain line B in Figure 4. This also indicates that the plunger 18 is attracted more distance from the retraced position in the piston moving state than in the piston stopping state when the same electric current is applied to the solenoid 17,

The graph shown in Figure 4 indicates the characteristics of the relationships between the magnetic attraction forces and the actual distances x with the electric current applied to the solenoid 17 being changed as a parameter, wherein the left end and the right end of the horizontal axis correspond respectively to the most advanced position and the retracted position of the plunger 18. The lines A and B respectively show the respective relationship between the magnetic attraction force generated in response to the electric current applied to the solenoid 17 and the actual distance x that the plunger 18 at the balanced position is apart from the most advanced position in the piston moving state and in the piston stopping state.

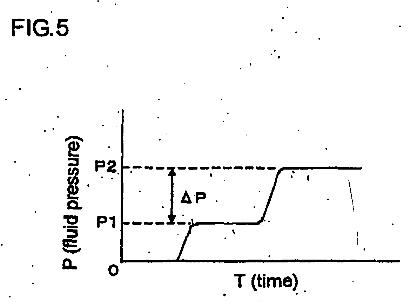

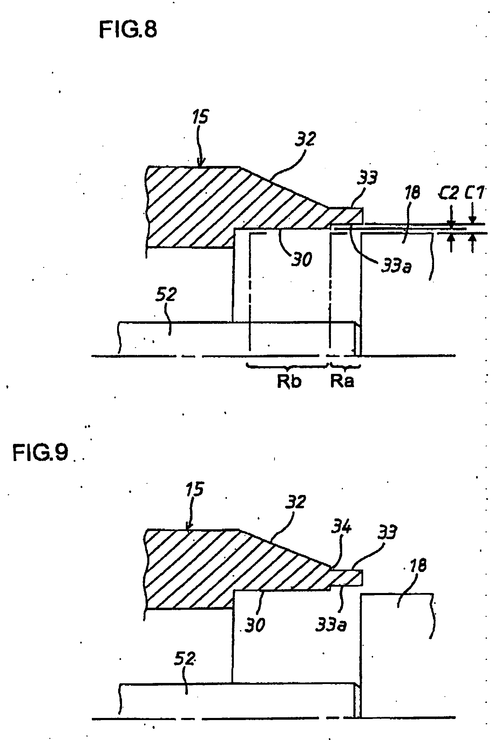

When an electric current is applied to the solenoid 17, the plunger 18 and the spool 20 are first moved to the balanced position in the piston moving state, wherein the fluid pressure P1 is supplied from the outlet port 48 to the pressure chamber of the clutch 60. After the piston 63 abuts on the clutch plates 64, the plunger 18 and the spool 20 are moved to the balanced position in the piston stopping state, wherein the fluid pressure P increases to the pressure P2 to make the clutch plates 64 frictionally engage with each other. A graph shown in Figure 5 indicates such characteristics of the fluid pressure P that increases as the time T passes. The fluid pressure P1 in the piston moving state is lower than the fluid pressure P2 in the piston stopping state by pressure difference $\Delta P(= P2-P1)$. A graph shown in Figure 6 indicates the characteristics of the fluid pressure In the respective states, which respectively change as the electric current increases.

The pressure difference $\Delta$P is calculated with an equation of $\Delta P=(-\Delta F(lx)+k\Delta x)/S$, x)/S, wherein; $\Delta$F(lx) is the difference between the magnetic attraction forces exerted on the plunger 18 with the electric current being applied to the solenoid 17 in the respective states, $\Delta$x is the difference between the actual distances x of the plunger 18 at the balanced positions in the respective states, and k is the spring constant of the spring 54;

White the electric current applied to the solenoid 17 is in a low current area, wherein the front end of the plunger 18 at the balanced position in the piston stopping state positions in the range Ra, the magnetic attraction force exerted on the plunger 18 at the balanced position in the piston stopping state is smaller than that exerted on plunger 18 at the balanced position in the piston moving state. And, while the electric current applied to the solenoid 17 is in a high current area, wherein the front end of the plunger 18 at the balanced position In the piston stopping state positions in the range Rb, there is little difference between the magnetic attraction forces exerted on the plunger 18 at the balanced positions in the respective states. A graph in Figure 4 shows such characteristics.

If there is the pressure difference ⊿P, the difference k⊿x between the actual distances x of the spool 20 at the balanced positions in the respective states Increases in accordance with the difference ⊿F(Ix) between the magnetic attraction forces exerted on the plunger 18 at the balanced positions in the respective states, that is, the balanced position of the spool 20 In the piston moving state is so shifted as to make the second land portion 42 of the spool 20 increase the opening degree in communication of the inlet port 50 with the outlet port 48. Therefore, when the electric current is in the low current range, wherein there is the difference between the magnetic attraction forces in the respective states, the flow rate of the fluid introduced into the pressure chamber of the clutch 60 through the Inlet and outlet port 50, 48 increases to enhance the responsivety in operation of the clutch 60.

The clutch 60 tends to vibrate when increasing high electric current is applied on the solenoid 17 to exert increasing magnetic attraction force on the plunger 18, and thereby to supply a high fluid pressure to the clutch in the piston stopping state. In the first embodiment, as an angle θ that is made by the nearly horizontal line and the inclined two-dot chain line is large as indicated in an ellipse Z in Figure 4, the damping force acting on the plunger 18 and spool 20 is enhanced while the electric current applied to the solenoid 17 is in the high current range. The nearly horizontal line indicates the magnetic attraction force as the actual distance x decreases, and the inclined two-dot chain line indicates the sum of the resilient force of the spring 54 and the feedback force. When the electric current applied to the solenoid is increased to make the fluid pressure high, the plunger 18 tends to overrun the balanced position In the piston stopping state. However, the damping force that acts on the plunger 18 and the spool 20 to move back to the balanced position becomes large as the angle θ becomes large, and thereby the damping capability of the plunger 18 and spool 20 becomes high. Accordingly, the clutch 60 is prevented from being vibrated by the fluid pressure fluctuation.

As there is provided the step 34 having an end surface on the outside of the annular projecting portion 31 between the tapered portion 32 and the thin cylindrical portion33, the tapered portion 32 can be formed as it has an inclination of any suitable degrees, wherein the magnetic attraction force hardly varies as the plunger 18 moves in the tapered portion32. And the wall of the annular cylindrical portion 33 can be formed thin enough to enhance the responsivety of the clutch 60 that is supplied fluid pressure from the solenoid-operated valve10.

Referring to Figure 7, an annular projecting portion 31 of a core 15 of the second embodiment is shown. The annular projecting portion 31 is composed of a tapered portion 32 and a thin cylindrical portion 33. In the second embodiment, a step 134 that has a slightly inclined end surface is formed between a rear end of the tapered portion 32 and the thin cylindrical portion 33. Therefore, the tapered portion 32 can be formed with an inclination of any suitable degrees.

In the third embodiment, as shown in Figure 8, an annular projecting portion 31 of a core 15 also is composed of a tapered portion 32 and a thin cylindrical portion 33. The thin cylindrical portion 33 in the third embodiment has a wall that is about twice as thick as the wall of the thin cylindrical portion 33 in the first embodiment. By thickening the wall of the cylindrical portion 33, it is prevented that the cylindrical portion 33 is deformed by a cutting force applied by a tool while machining the cylindrical portion 33 with a tool in mass-producing cores. But as the wall of the cylindrical portion 33 is thickened in the third embodiment, the saturated degree of the thin cylindrical portion 33 with a magnetic flux becomes lower than that in the first embodiment. A step having an end surface is not formed on the outside of the annular projecting portion 31.

In the third embodiment, the core 15 is provided on its axis with a stepped through hole, whose large-diameter hole 30 is provided with an opening potion 33a on the inside of the cylindrical portion 33. An inner diameter of the opening portion 33a is a little larger than that of the other portion of the large-diameter hole 30. Accordingly, an air gap C1 between the opening portion 33a of the cylindrical portion 33 and the plunger 18 that moves therein is larger than an air gap C2 between the other portion of the large-diameter hole 30 and the plunger 18. An increased amount of the gap C1 between the opening portion 33a and the plunger 18 is so determined that the increase of magnetic reluctance due to the increase of the gap C1 cancels the decrease of the saturated degree of the cylindrical portion 33 with a magnetic flux due to the increase of the thickness thereof. Therefore, the characteristics of the magnetic attraction force that increases as the plunger 18 moves into the cylindrical portion 33 in the third embodiment is substantially the same as that in the first embodiment.

Referring to Figure 9, an annular projecting portion 31 of a core 15 of the forth embodiment is shown. The annular projecting portion 31 also is composed of a tapered portion 32 and a thin cylindrical portion 33. The thin cylindrical portion 33 in the forth embodiment also has a thicker wall and an opening potion 33a on the inside thereof. In the forth embodiment, a step 34 that has an end surface perpendicular to the direction of the axial movement of the plunger 18 is formed on the outside of the annular projecting portion 31 between the rear end of the tapered portion 32 and the thin cylindrical portion 33. Therefore, the tapered portion 32 can be formed with an inclination of any suitable degrees.

Obviously, numerous modifications and variations of the present invention are possible in light of the above teachings. It is therefore to be understood that within the scope of the appended claims, the present invention may be practiced otherwise than as specifically described herein.

**Claims**

1. A solenoid-operated valve comprising:

   a valve sleeve (19) and a spool (20) slidably received in said valve sleeve (19) for regulating the pressure of fluid supplied thereto;
   a stator (13) having a core (15) provided with an annular projecting portion (31);
   a plunger (18) received in said stator (13) to be slidably guided in an inner bore formed in said stator (13) and being movable into said annular projecting portion (31) ;
   a spring (54) for resiliently urging said spool (20) toward said plunger (18); and
   an solenoid (17) for magnetizing said stator (13) to attract said plunger (18) against the resilient force of said spring (54) so as to move said plunger (18) into said annular projecting portion (31);

   wherein said annular projecting portion (31) is formed with a tapered portion (32) whose sectional area becomes smaller as a section is closer to the rear end thereof and a thin cylindrical portion (33) that projects from the rear end of said tapered portion (32),
   **characterized in that**
   a step (34; 134) that has an end surface is formed on the outside of the annular projecting portion (31) between said rear end of the tapered portion (32) and said thin cylindrical portion (33).

2. A solenoid-operated valve comprising:

   a valve sleeve (19) and a spool (20) slidably received in said valve sleeve (19) for regulating the pressure of fluid supplied thereto;
   a stator (13) having a core (15) provided with an annular projecting portion (31);
   a plunger (18) received in said stator (13) to be slidably guided in an inner bore formed in said stator (13) and being movable into said annular projecting portion (31);
   a spring (54) for resiliently urging said spool (20) toward said plunger (18); and
   an solenoid (17) for magnetizing said stator (13) to attract said plunger (18) against the resilient force of said spring (54) so as to move said plunger (18) into said annular projecting portion (31);

   wherein said annular projecting portion (31) is formed with a tapered portion (32) whose sectional area becomes smaller as a section is closer to the rear end thereof and a thin cylindrical portion (33) that projects from the rear end of said tapered portion (32), and
   wherein said annular projecting portion (31) is provided with a hole (30) and an opening portion (33a) on the inside of said thin cylindrical portion (33),
   **characterized in that**
   said plunger (18) moves in said hole (30),
   an inner diameter of the opening portion (33a) is a little larger than that of said hole (30).

3. The solenoid-operated valve as set forth in claim 1, wherein said end surface of said step (34) is perpendicular to the direction of the axial movement of said plunger (18).

4. The solenoid-operated valve as set forth in claim 1 or 2, wherein said valve sleeve (19) is provided with an inlet port (50) that is introduced pressure fluid, an outlet port (48) that is connected with a device, discharge port (49) that is connected with a reservoir and a feedback port (45) that is communicated with said outlet port (48); and
   said regulated pressure of fluid from said outlet port (48) is introduced to a feedback chamber through said feedback port (45) to urge said plunger (18) in the same direction in which said spring (54) urges said spool (20); and
   wherein said spool (20) is provided with a first land portion (41) and a second land portion (42); and in proportion to the moving amount of the spool (20) into said annular projecting portion (31), said second land portion(42) increases the opening degree in communication of said inlet port (50) with said outlet port (48) and said first land portion (41) decreases the opening degree in communication of said outlet port (48) with said discharge port (49).

5. The solenoid-operated valve as set forth in claim 1 or 2, wherein said valve sleeve (19) is provided with an inlet port (50) that is introduced pressure fluid, an outlet port (48) that is connected with a device, discharge port (49) that is connected with a reservoir and a feedback port (45) that is communicated with said outlet port (48); and
   wherein said outlet port (48) is connected with a clutch (60), a piston (63) of which is moved in response to the fluid pressure supplied from said outlet port (48) in a piston moving state and stops after pressing clutch plates (64) to frictionally engage said clutch (60) in a piston stopping state, and

wherein while the electric current applied to the solenoid (17) is in a low current area where the front end of the plunger (18) at the balanced position in the piston stopping state is in the thin cylindrical portion (33), the magnetic attraction force exerted on the plunger (18) at the balanced position in the piston stopping state is smaller than that exerted on the plunger (18) at the balanced position in the piston moving state, and wherein while the electric current applied to the solenoid (17) is in a high current area where the front end of the plunger (18) at the balanced position in the piston stopping state is in the tapered portion (32), there is little difference between the magnetic attraction forces exerted on the plunger (18) at the balanced positions in the respective states.

## Patentansprüche

1.  Elektromagnetisch betriebenes Ventil mit

    einem Ventilgehäuse (19) und einem Ventilkörper (20), der in dem Ventilgehäuse (19) gleitbar aufgenommen ist, um den Druck eines dorthin zugeführten Fluids zu regulieren;

    einem Stator (13) mit einem Kern (15), der mit einem ringförmigen Vorsprungsabschnitt (31) versehen ist;

    einem Kolben (18), der in dem Stator (13) aufgenommen ist, um in einer Innenbohrung, die in dem Stator (13) ausgebildet ist, gleitbar geführt zu sein, und der in dem ringförmigen Vorsprungsabschnitt (31) beweglich ist;

    einer Feder (54) zum elastischen Drängen des Ventilkörpers (20) in Richtung des Kolbens (18); und

    einem Elektromagnet (17) zum Magnetisieren des Stators (13), um den Kolben (18) gegen die Federkraft der Feder (54) anzuziehen, um den Kolben (18) in den ringförmigen Vorsprungsabschnitt (31) zu bewegen;

    wobei der ringförmige Vorsprungsabschnitt (31) mit einem konischen Abschnitt (32), dessen Querschnittsfläche zu seinem hinteren Ende hin kleiner wird, und einem dünnen zylindrischen Abschnitt (33) ausgebildet ist, der von dem hinteren Ende des konischen Abschnitts (32) vorsteht,

    **dadurch gekennzeichnet, dass**

    ein Absatz (34; 134), der eine Endfläche hat, an der Außenseite des ringförmigen Vorsprungsabschnitts (31) zwischen dem hinteren Ende des konischen Abschnitts (32) und dem dünnen zylindrischen Abschnitt (33) ausgebildet ist.

2.  Elektromagnetisch betriebenes Ventil mit

    einem Ventilgehäuse (19) und einem Ventilkörper (20), der in dem Ventilgehäuse (19) gleitbar aufgenommen ist, um den Druck eines dorthin zugeführten Fluids zu regulieren;

einem Stator (13) mit einem Kern (15), der mit einem ringförmigen Vorsprungsabschnitt (31) versehen ist;

einem Kolben (18), der in dem Stator (13) aufgenommen ist, um in einer Innenbohrung, die in dem Stator (13) ausgebildet ist, gleitbar geführt zu sein, und der in dem ringförmigen Vorsprungsabschnitt (31) beweglich ist;

einer Feder (54) zum elastischen Drängen des Ventilkörpers (20) in Richtung des Kolbens (18); und

einem Elektromagnet (17) zum Magnetisieren des Stators (13), um den Kolben (18) gegen die Federkraft der Feder (54) anzuziehen, um den Kolben (18) in den ringförmigen Vorsprungsabschnitt (31) zu bewegen;

wobei der ringförmige Vorsprungsabschnitt (31) mit einem konischen Abschnitt (32), dessen Querschnittsfläche zu seinem hinteren Ende hin kleiner wird, und einem dünnen zylindrischen Abschnitt (33) ausgebildet ist, der von dem hinteren Ende des konischen Abschnitts (32) vorsteht, und

wobei der ringförmige Vorsprungsabschnitt (31) mit einem Loch (30) und einem Öffnungsabschnitt (33a) an der Innenseite des dünnen zylindrischen Abschnitts (33) versehen ist,

**dadurch gekennzeichnet, dass**

sich der Kolben (18) in dem Loch (30) bewegt, und ein Innendurchmesser des Öffnungsabschnitts (33a) geringfügig größer als der des Lochs (30) ist.

3.  Elektromagnetisch betriebenes Ventil nach Anspruch 1, wobei die Endfläche des Absatzes (34) senkrecht zu der Richtung der axialen Bewegung des Kolbens (18) ist.

4.  Elektromagnetisch betriebenes Ventil nach Anspruch 1 oder 2, wobei das Ventilgehäuse (19) mit einem Einlassanschluss (50), der ein mit Druck beaufschlagtes Fluid zuführt, einem Auslassanschluss (48), der mit einer Vorrichtung verbunden ist, einem Abgabeanschluss (49), der mit einem Reservoir verbunden ist, und einem Rückführanschluss (45) versehen ist, der mit dem Auslassanschluss (48) verbunden ist;

    wobei der regulierte Fluiddruck von dem Auslassanschluss (48) durch den Rückführanschluss (45) zu einer Rückführkammer zugeführt wird, um den Kolben (18) in die gleiche Richtung zu drängen, in der die Feder (54) den Ventilkörper (20) drängt; und

    wobei der Ventilkörper (20) mit einem ersten Stegabschnitt (41) und einem zweiten Stegabschnitt (42) versehen ist; und wobei, im Verhältnis zu dem Bewegungsbetrag des Ventilkörpers (20) in den ringförmigen Vorsprungsabschnitt (31), der zweite Stegabschnitt (42) den Öffnungsgrad einer Verbindung des Einlassanschlusses (50) mit dem Auslassanschluss (48) erhöht und der erste Stegabschnitt (41) den Öffnungsgrad einer Verbindung des Auslassanschlusses (48) mit dem Abgabeanschluss (49) verringert.

**5.** Elektromagnetisch betriebenes Ventil nach Anspruch 1 oder 2, wobei das Ventilgehäuse (19) mit einem Einlassanschluss (50), der ein mit Druck beaufschlagtes Fluid zuführt, einem Auslassanschluss (48), der mit einer Vorrichtung verbunden ist, einem Abgabeanschluss (49), der mit einem Reservoir verbunden ist, und einem Rückführanschluss (45) versehen ist, der mit dem Auslassanschluss (48) verbunden ist; und

wobei der Auslassanschluss (48) mit einer Kupplung (60) verbunden ist, deren Kolben (63) in Erwiderung auf den Fluiddruck, der von dem Auslassanschluss (48) zugeführt wird, in einem Kolbenbewegungszustand bewegt wird und in einem Kolbenstoppzustand stoppt, nachdem er Kupplungsplatten (64) betätigt hat, um die Kupplung (60) in Reibeingriff zu bringen, und

wobei, während der elektrische Strom, der an dem Elektromagneten (17) angelegt wird, in einem Bereich eines niedrigen Stroms ist, in dem das vordere Ende des Kolbens (18) in der Gleichgewichtsposition in dem Kolbenstoppzustand in dem dünnen zylindrischen Abstand (33) ist, die magnetische Anziehungskraft, die auf den Kolben (18) in der Gleichgewichtsposition in dem Kolbenstoppzustand ausgeübt wird, kleiner als die Kraft ist, die auf den Ventilkörper (18) in der Gleichgewichtsposition in dem Kolbenbewegungszustand ausgeübt wird, und wobei, während der elektrische Strom, der an dem Elektromagneten (17) angelegt wird, in einem Bereich eines hohen Stroms ist, in dem das vordere Ende des Kolbens (18) in der Gleichgewichtsposition in dem Kolbenstoppzustand in dem konischen Abschnitt (32) ist, es eine geringfügige Differenz zwischen den magnetischen Anziehungskräften gibt, die auf den Kolben (18) in den Gleichgewichtspositionen in den jeweiligen Zuständen ausgeübt werden.

**Revendications**

**1.** Soupape actionnée par un solénoïde comprenant:

un manchon de soupape (19) et un tiroir cylindrique (20) reçu de manière coulissante dans ledit manchon de soupape (19) pour réguler la pression d'un fluide qui lui est fourni;
un stator (13) ayant un noyau (15) pourvu d'une portion de projection annulaire (31);
un piston plongeur (18) reçu dans ledit stator (13) pour être guidé de manière coulissante dans un alésage intérieur formé dans ledit stator (13) et étant mobile dans ladite portion de projection annulaire (31);

un ressort (54) pour pousser de manière élastique ledit tiroir cylindrique (20) vers ledit piston plongeur (18); et
un solénoïde (17) pour magnétiser ledit stator (13) afin d'attirer ledit piston plongeur (18) contre la force élastique dudit ressort (54) de manière à déplacer ledit piston plongeur (18) dans ladite portion de projection annulaire (31);

où ladite portion de projection annulaire (31) est formée avec une portion effilée (32) dont l'aire en coupe devient plus petite à mesure qu'une section est plus proche de l'extrémité arrière correspondante et une portion cylindrique mince (33) qui se projette depuis l'extrémité arrière de ladite portion effilée (32), **caractérisée en ce que**
un palier (34; 134) qui a une surface d'extrémité est formé sur l'extérieur de la portion de projection annulaire (31) entre ladite extrémité arrière de la portion effilée (32) et ladite portion cylindrique mince (33).

**2.** Soupape actionnée par un solénoïde comprenant:

un manchon de soupape (19) et un tiroir cylindrique (20) reçu de manière coulissante dans ledit manchon de soupape (19) pour réguler la pression d'un fluide qui lui est fourni;
un stator (13) ayant un noyau (15) pourvu d'une portion de projection annulaire (31);
un piston plongeur (18) reçu dans ledit stator (13) afin d'être guidé de manière coulissante dans un alésage intérieur formé dans ledit stator (13) et étant mobile dans ladite portion de projection annulaire (31);
un ressort (54) pour pousser de manière élastique ledit tiroir cylindrique (20) vers ledit piston plongeur (18); et
un solénoïde (17) pour magnétiser ledit stator (13) afin d'attirer ledit piston plongeur (18) contre la force élastique dudit ressort (54) de manière à déplacer ledit piston plongeur (18) dans ladite portion de projection annulaire (31);
où ladite portion de projection annulaire (31) est formée avec une portion effilée (32) dont l'aire en coupe devient plus petite à mesure qu'une section est plus proche de l'extrémité arrière correspondante et une portion cylindrique mince (33) qui se projette depuis l'extrémité arrière de ladite portion effilée (32), et
où ladite portion de projection annulaire (31) est pourvue d'un trou (30) et d'une portion d'ouverture (33a) sur l'intérieur de ladite portion cylindrique mince (33),

**caractérisée en ce que**
ledit piston plongeur (18) se déplace dans ledit trou (30),
un diamètre intérieur de la portion d'ouverture (33a) est un peu plus grand que celui dudit trou (30).

3. Soupape actionnée par un solénoïde selon la revendication 1, dans laquelle ladite surface d'extrémité dudit palier (34) est perpendiculaire à la direction du mouvement axial dudit piston plongeur (18).

4. Soupape actionnée par un solénoïde selon la revendication 1 ou 2, dans laquelle ledit manchon de soupape (19) est pourvu d'un orifice d'admission (50) qui reçoit un fluide sous pression, un orifice de sortie (48) qui est relié à un dispositif, d'un orifice de déchargement (49) qui est relié à un réservoir et d'un orifice de réintroduction (45) qui est mis en communication avec ledit orifice de sortie (48); et
ladite pression régulée de fluide depuis ledit orifice de sortie (48) est introduite à une chambre de réintroduction à travers ledit orifice de réintroduction (45) afin de pousser ledit piston plongeur (18) dans la même direction dans laquelle ledit ressort (54) pousse ledit tiroir cylindrique (20); et
où ledit tiroir cylindrique (20) est pourvu d'une première portion lèvre (41) et d'une deuxième portion lèvre (42); et proportionnellement à la grandeur de déplacement du tiroir cylindrique (20) dans ladite portion de projection annulaire (31), ladite deuxième portion lèvre (42) augmente le degré d'ouverture en communication dudit orifice d'admission (50) avec ledit orifice de sortie (48) et ladite première portion lèvre (41) diminue le degré d'ouverture en communication dudit orifice de sortie (48) avec ledit orifice de déchargement (49).

5. Soupape actionnée par un solénoïde selon la revendication 1 ou 2, dans laquelle ledit manchon de soupape (19) est pourvu d'un orifice d'admission (50) par lequel est introduit du fluide sous pression, d'un orifice de sortie (48) qui est relié à un dispositif, d'un orifice de déchargement (49) qui est relié à un réservoir et d'un orifice de réintroduction (45) qui est mis en communication avec ledit orifice de sortie (48); et
où ledit orifice de sortie (48) est relié à un embrayage (60), dont un piston (63) est déplacé en réponse à la pression fluidique alimentée depuis l'orifice de sortie (48) dans un état de déplacement du piston et s'arrête après avoir appuyé sur des plaques d'embrayage (64) pour engager par friction ledit embrayage (60) dans un état d'arrêt du piston, et
où, tandis que le courant électrique appliqué au solénoïde (17) est dans une zone de courant bas dans laquelle l'extrémité avant du piston plongeur (18) à la position équilibrée dans l'état d'arrêt du piston est dans la portion cylindrique mince (33), la force d'attraction magnétique exercée sur le piston plongeur (18) à la position équilibrée dans l'état d'arrêt du piston est plus petite que celle exercée sur le piston plongeur (18) à la position équilibrée dans l'état de déplacement du piston, et où tandis que le courant électrique appliqué au solénoïde (17) est dans une zone de courant élevé dans laquelle l'extrémité avant du piston plongeur (18) à la position équilibrée dans l'état d'arrêt du piston est dans la position effilée (32), il y a peu de différence entre la force d'attraction magnétique exercée sur le piston plongeur (18) aux positions équilibrées dans les états respectifs.

FIG.1

FIG.2

FIG.7

FIG.3

FIG.6

fluid pressure (kpa)

P2

P1

ΔP

electric current (A)

0

FIG.4

magnetic attraction force (kgf)

1.0A
0.9A
0.8A
0.7A
0.6A
0.5A
0.4A
0.3A
0.2A
0.1A

Z

θ

A

B

Rb

Ra

actual distance x

0

FIG.5

FIG.8

FIG.9

## REFERENCES CITED IN THE DESCRIPTION

### Patent documents cited in the description

- US 20030047699 A1
- JP 11287348 A
- JP 2000274546 A